# EUROPÄISCHE PATENTANMELDUNG

(11) **EP 2 626 192 A1**
(43) Veröffentlichungstag der Anmeldung: **14.08.2013**
(21) Anmeldenummer: 13000009.4
(22) Anmeldetag: 02.01.2013
(51) Int. Cl.: B29C 67/00

(54) **Modelliermaterial sowie Verfahren und Vorrichtung zur Herstellung eines dreidimensionalen Objektes durch Schmelzschichtung**

(30) Priorität: 09.02.2012 DE 102012002419
(71) Anmelder: FIT Fruth Innovative Technologien GmbH, 92331 Parsberg (DE)
(72) Erfinder: Fruth, Carl, 92331 Parsberg (DE)
(74) Vertreter: Schneider, Andreas

(57) **Zusammenfassung**

Die Erfindung betrifft ein Verfahren und eine Vorrichtung (1) zur Herstellung eines dreidimensionalen Objektes (2) durch Schmelzschichtung, wobei das Objekt (2) schichtweise aus einem schmelzfähigen Modelliermaterial (3) aufgebaut wird. Darüber hinaus betrifft die Erfindung ein solches Modelliermaterial (3). Um eine präzise und dennoch einfache Materialzufuhr für ein Schmelzschichtungsverfahren bereitzustellen, wird vorgeschlagen, Modelliermaterial (3) in Stangenform zu verwenden.

## Beschreibung

Modelliernaterial sowie Verfahren und Vorrichtung zur Herstellung eines dreidimensionalen Objektes durch Schmelzschichtung

Die vorliegende Erfindung betrifft ein Verfahren und eine Vorrichtung zur Herstellung eines dreidimensionalen Objektes durch Schmelzschichtung, wobei das Objekt schichtweise aus einem schmelzfähigen Modelliermaterial aufgebaut wird. Darüber hinaus betrifft die Erfindung ein solches Modelliermaterial.

Aus dem Stand der Technik ist ein Fertigungsverfahren aus dem Bereich des Rapid Prototyping bekannt, das als "Fused Deposition Modeling" (FDM) oder "Schmelzschichtung" bezeichnet wird. Dabei wird ein dreidimensionales Objekt schichtweise unter Verwendung eines schmelzfähigen Kunststoffes aufgebaut. Entsprechende Vorrichtungen werden auch als 3D-Drucker bezeichnet.

Bei dem Verfahren wird ein Modelliermaterial durch Erwärmung verflüssigt und mit Hilfe einer in einer Fertigungsebene in x-y-Richtung frei verfahrbaren Düse schichtweise auf einer Bauplattform abgelegt. Entsprechend der aufgebrachten Schichtdicke wird die Bauplattform in z-Richtung abgesenkt. Nach dem Extrudieren des Modelliermaterials kühlt dieses ab und erstarrt. Die einzelnen Schichten verbinden sich dabei zu dem gewünschten dreidimensionalen Objekt.

Bei dem verwendeten Modelliermaterial handelt es sich entweder um ein bereits flüssiges Modelliermaterial oder um ein festes Modelliermaterial, das noch verflüssigt werden muß. Bei der Verwendung von flüssigem Modelliermaterial müssen entsprechend abgedichtete Behälter verwendet werden, die bei einem Materialwechsel verschlossen bzw. geöffnet werden müssen, was vergleichsweise aufwendig ist. Daher wird bevorzugt festes Modelliermaterial verwendet. Hierbei handelt es sich zumeist um ein Kunststoff- oder Wachsmaterial. Bei den aus dem Stand der Technik bekannten Verfahren wird das feste Modelliermaterial in Form eines drahtförmigen Filamentstranges bereitgestellt. Das flexible Modellierfilament liegt dabei in Rollenform vor. Es ist auf einer Spule aufgewickelt und wird von dort der FDM-Vorrichtung zugeführt.

Dieses herkömmliche Verfahren ist mit verschiedenen Nachteilen verbunden. So kann das zumeist mit Hilfe eines Extrusionsverfahrens hergestellte Modellierfilament einen schwankenden Durchmesser aufweisen, was ein sich in Drahtrichtung änderndes Materialvolumen und somit einen schwankenden Materialdurchfluß an der Düse zur Folge hat. Dadurch kommt es zu ungewollten Schichtdickenschwankungen. Als nachteilig hat sich darüber hinaus der beim Vorschub des Filamentstranges auftretende Schlupf erwiesen, der ebenfalls zu Unregelmäßigkeiten im Materialauftrag führt. Nachteilig ist ebenfalls die aufwendige Handhabung der Filamentspulen, vor allem dann, wenn während des Aufbaus eines Objektes ein Materialwechsel erforderlich ist.

Eine Aufgabe der vorliegenden Erfindung ist es, eine besonders präzise und dennoch einfache Materialzufuhr für ein Schmelzschichtungsverfahren bereitzustellen.

Diese Aufgabe wird durch ein Modelliermaterial nach Anspruch 1, ein Verfahren nach Anspruch 7 bzw. eine Vorrichtung nach Anspruch 9 gelöst. Vorteilhafte Ausführungen der Erfindung sind in den Unteransprüchen angegeben. Die im Folgenden im Zusammenhang mit dem Verfahren erläuterten Vorteile und Ausgestaltungen gelten sinngemäß auch für die erfindungsgemäße Vorrichtung zur Durchführung des Verfahrens sowie für das erfindungsgemäße Modelliermaterial und umgekehrt.

Eine Kernidee der Erfindung ist es, anstelle eines flexiblen, drahtförmigen, auf einer Spule aufgewickelten, im Prinzip beliebig langen Filamentstranges ein festes, in Stangen- bzw. Stabform vorliegendes Modelliermaterial zu verwenden, welches von definierter endlicher Länge ist. Anders ausgedrückt ist das Modelliermaterial vor dem Verflüssigen als Stange bzw. Stab ausgebildet. Eine solche Modelliermaterialstange, nachfolgend kurz als Modellierstange oder Stange bezeichnet, ist aufgrund ihrer Stangen- bzw. Stabform im wesentlichen starr und daher viel handlicher, als das bisherige Rollenmaterial. Dadurch vereinfacht sich die Handhabung des Modelliermaterials erheblich. Insbesondere ist ein Wechsel des Modelliermaterials sehr viel einfacher und schneller möglich. Darüber hinaus ist die Modellierstange, entsprechend der natürlichen Form einer Stange, vorzugsweise im wesentlichen gerade und auch dadurch besonders einfach handhabbar, lagerbar und transportierbar.

Da die Modellierstange durch Spritzgießen herstellbar ist, ist mit vertretbarem Aufwand eine sehr viel präzisere Geometrie des dem Extrusionskopf des 3D-Druckers zuzuführenden Modelliermaterials möglich. Insbesondere kann das Volumen in Stangenlängsrichtung äußerst konstant gehalten werden.

Die Modellierstange kann einen kreisrunden Querschnitt aufweisen. Von besonderem Vorteil ist es jedoch, wenn die Modellierstange einen nichtrunden Querschnitt aufweist, da in diesem Fall besonders einfach eine präzise Profilierung der Modellierstange möglich ist. In einer Ausführungsform der Erfindung weist die Modellierstange hierzu ein sich in Stangenlängsrichtung änderndes Oberflächenprofil auf. Ein solches Oberflächenprofil dient in einer besonders vorteilhaften Ausführungsform der Erfindung einem sicheren und gleichmäßigen Vorschub des Modelliermaterials in den Extrusionskopf und damit einer präzisen Dosierung der gewünschten Materialmenge. Dieses Oberflächenprofil erstreckt sich wenigstens abschnittsweise, vorzugsweise aber durchgängig über die gesamte Länge der Modellierstange.

Das Oberflächenprofil kann beispielsweise aus unregelmäßig auf der Stangenoberfläche verteilte Erhebungen bestehen, so daß sich eine unebene, rauhe Oberfläche ergibt, die aufgrund der erhöhten Reibung zu einem verbesserten Vorschub des Modelliermaterials führt, wenn für den Transport der Modellierstange herkömmliche, mehr oder weniger glatte Vorschubrollen zum Einsatz kommen. Vorzugsweise wird das sich ändernde Oberflächenprofil jedoch durch in Stangenlängsrichtung beabstandet voneinander angeordnete, wohldefinierte Profilelemente gebildet, die in vorzugsweise gleichmäßigen Abständen an der Oberfläche der Modellierstange angeordnet sind.

Bei den Profilelementen handelt es sich vorzugsweise um aus der Oberfläche der Modellierstange herausragende Zähne, so daß sich eine gezahnte Modellierstange ergibt. Vorzugsweise stehen die Zähne dabei senkrecht zu der Stangenlängsrichtung, die vorteilhafterweise zugleich der Vorschubrichtung des Modelliermaterials entspricht. Unter bestimmten Umständen ist aber auch eine Schrägstellung der Zähne in Vorschubrichtung oder entgegen der Vorschubrichtung möglich. Mit Hilfe einer derart gezahnten Modellierstange ist ein formschlüssiger Antrieb der Modellierstange möglich, wodurch sich ein besonders gleichmäßiger Vorschub ohne Schlupf ergibt. Der Antrieb erfolgt beispielsweise mit Hilfe einer Anzahl von Antriebsrädern oder -rollen, die über entsprechend profilierte Antriebselemente verfügen, insbesondere mit Hilfe eines oder mehrerer Zahnräder.

Weist die Modellierstange eine einzelne flache Seitenfläche auf, dann sind die Profilelemente vorzugsweise an dieser Seitenfläche angeordnet. Bereits mit einer solchen einseitigen Anordnung von Profilelementen ist eine vergleichsweise sichere Zuführung der Modellierstange zu der Extrusionsdüse möglich. Vorzugsweise sind Profilelemente jedoch an zwei sich gegenüberliegenden Seitenflächen der Modellierstange vorgesehen, wie sie beispielsweise bei einer Modellierstange mit einem rechteckigen Querschnitt vorhanden sind.

Die Profilelemente sind dabei vorzugsweise derart angeordnet, daß die Querschnittsfläche des Modellierstabes stets konstant ist. In einer Ausführungsform der Erfindung sind hierzu die Profilelemente in Stangenlängsrichtung versetzt zueinander angeordnet. Eine konstante Querschnittsfläche gewährleistet, daß die Menge des dem Extrusionskopf zugeführten Modellierraterials trotz des sich ändernden Oberflächenprofils konstant bleibt, so daß ein gleichbleibender Materialfluß sichergestellt ist.

Die Profilierung des Modellierstabes dient in einer weiteren Ausführungsform der Erfindung zudem zur Positionsbestimmung bzw. Positionsüberwachung des dem Extrusionskopf zugeführten Modelliermaterials und damit zur Durchflußüberwachung und/oder zur Überwachung des Vorschubantriebes, insbesondere zur Schlupfprüfung.

Ebenfalls möglich ist der Einsatz von Modellierstangen, die über keine Profilierung verfügen. In diesem Fall kann unter Umständen der herkömmliche, für Rollenware geeignete Antrieb weiterverwendet werden.

Durch die erfindungsgemäße Verwendung von Modellierstangen anstelle von Rollenware ist es möglich, die Länge der zu verwendeten Modellierstangen vor deren Verwendung genau festzulegen. Die Modellierstangen können somit objektspezifisch, d. h. an das jeweilige herzustellende Objekt angepaßt, vorgefertigt werden. Ist beispielsweise für die Herstellung eines bestimmten Objektes die Verwendung von vier Modellierstangen vorgesehen, so kann die Reihenfolge der Stangen vertauscht werden oder aber Stangen können ausgetauscht, d. h. durch andere Stangen ersetzt werden. Dadurch ergibt sich eine Vielzahl von Objektvarianten, die sich auf einfachste Weise verwirklichen lassen. Durch die Verwendung der Modellierstangen anstelle von Rollenware ist eine besonders einfache Individualisierung der Objekte, insbesondere hinsichtlich des verwendeten Materials und/oder der verwendeten Farben möglich.

Insbesondere mit Blick auf die durch die Erfindung eröffnete Möglichkeit, unterschiedliche Modelliermaterialien auf besonders einfache Art und Weise miteinander zu kombinieren und damit individuelle Objekte anzufertigen, wodurch unter anderem kurzfristig auf entsprechende Kundenwünsche reagiert werden kann, hat sich eine weitere Ausführungsform als besonders vorteilhaft erwiesen, bei der die verwendete Modellierstange mehrkomponentig aufgebaut ist. Mit anderen Worten ist die Stange das Stangenmaterial betreffend nicht homogen. Statt eines einheitlichen Stangenmaterials kommen mindestens zwei unterschiedliche Materialien, d. h. Materialien mit unterschiedlichen Materialeigenschaften, zum Einsatz. Dies läßt sich besonders einfach mit der dem Fachmann grundsätzlich bekannten Mehrkomponenten-Spritzgießtechnik verwirklichen, wobei sowohl das koaxiale Mehrkomponenten-Spritzgießen, als auch das Mehrkomponenten-Verbundspritzgießen eingesetzt werden kann. Bei den dabei verwendeten unterschiedlichen Schmelzen kann es sich dabei um verschiedene Materialien, beispielsweise ein hartes und ein weiches Material, und/oder um unterschiedliche Farben handeln. Die Anzahl der verwendeten Schmelzen und deren Kombination bzw. Anordnung bei der Herstellung der Modellierstange wird vorteilhaftweise nach Maßgabe des Objektes bestimmt, welches unter Verwendung der Modellierstange hergestellt werden soll. So kann beispielsweise bei Objekten, die unter Verwendung unterschiedlicher Materialien aufgebaut werden sollen, von vornherein unter genauer Bereitstellung der erforderlichen Materialmenge eine entsprechende Materialabfolge in der Modellierstange vorgesehen sein.

Als Komporenten einer mehrkomponentigen Modellierstange werden in einer weiteren Ausführungsform der Erfindung ein oder mehrere Reaktivstoffe verwendet, wobei hierunter allgemein Stoffe verstanden werden, die beim Aufschmelzen reagieren. Dabei handelt es sich in der Regel um eine chemische Reaktion mit einer anderen speziell zu diesem Zweck vorgesehenen Reaktivstoffkomponente oder aber einer ohnehin vorgesehenen Materialkomponente des Modelliermaterials während des gemeinsamen Aufschmelzens.

Eine derartige Reaktion kann beispielsweise sich während des Herstellungsverfahrens, z. B. während des Aushärtens, oder zu einem späteren Zeitpunkt ändernde Farben hervorrufen oder aber die Reaktion führt zu einer Beleuchtung des Objektes nach Art eines "Glüheffektes", wodurch ein zeitweise oder dauerhaft selbstleuchtendes Objekt oder Objektteil entsteht. Die hervorgerufene Reaktion kann auch in der Entfaltung eines Duftstoffes liegen, welche entweder kurzzeitig, z. B. während der Herstellung des Objektes, erfolgt oder in der Bereitstellung eines dem Objekt dauerhaft anhaftenden Duftes.

In einer weiteren Ausführungsform der Erfindung enthält die Modellierstange einen oder mehrere Hohlräume, vorzugsweise in Form von sich in Stangenlängsrichtung erstreckenden Kanälen, wobei diese Hohlräume mit einem oder mehreren Reaktivstoffen gefüllt sind. Bei Kontakt dieser Reaktivstoffe miteinander, beispielsweise während des Aufschmelzvorgangs, kommt es dann, wie oben beschrieben, zu einer chemischen Reaktion.

Eine mehrkomponentige Modellierstange kann, wenn der Querschnitt der Stange nicht konstant, sondern variabel ist, auch derart ausgeführt sein, daß auf einem Kern bzw. um eine Stangenbasis mit konstantem Durchmesser herum weitere Komponenten plaziert sind, die sich in Material und/oder Farbe von dem Kernmaterial unterscheiden. Solche, im Querschnitt variable Modellierstangen lassen sich mit herkömmlichen Spritzgießtechniken vergleichsweise einfach herstellen. Durch das Anbringen von Material unterschiedlicher Farbe lassen sich Modellierstangen mit reliefartiger Oberfläche bereitstellen, wobei das Relief eine beliebige Form annehmen kann, beispielsweise Buchstaben oder Figuren ausbilden kann. Mit Hilfe von Modellierstangen mit sich ändernden Querschnitten, kann auch auf einfache Art und Weise eine objektspezifische Schichtdickenvariation ermöglicht werden. Zur Verarbeitung derartiger Modellierstangen weist der Extrusionskopf des 3D-Druckers eine entsprechend angepaßte, vorzugsweise sich variabel an den Querschnitt der Modellierstange anpassende Extrusionsdüse auf.

Werden mehrere Modellierstangen zur Herstellung eines Objektes verwendet, dann können diese in einer einfachen Ausführungsform der Erfindung manuell zugeführt werden. Dabei werden die Modellierstangen von Hand an ihren Enden miteinander verbunden. Besonders vorteilhaft ist jedoch eine automatische Stangenzufuhr, bei der die Modellierstangen dem Extrusionskopf automatisch zugeführt und/oder automatisch miteinander verbunden werden, um eine ununterbrochene Materialzufuhr sicherzustellen. Hierzu weisen die Modellierstangen an ihren Enden Verbindungselemente auf, die zur Herstellung einer mechanischen Verbindung zu einer weiteren Modellierstange ausgebildet und insbesondere für ein automatisches Ineinandergreifen bzw. Verbinden geeignet sind. Als besonders vorteilhaft haben sich dabei

Verbindungselemente zur Ausbildung einer Rast- oder Schnappverbindung erwiesen. Alternativ dazu oder zur Unterstützung der Herstellung der Verbindung der Stangenenden können Verbindungselemente in Form kleiner, in die Stangenenden eingelassener Magnete verwendet werden, die unter Nutzung einer magnetischen Anziehungskraft die Verbindung der Stangenenden unterstützen oder verwirklichen. Ein Ausführungsbeispiel der Erfindung wird nachfolgend anhand der Zeichnungen näher erläutert. Hierbei zeigen:
- Fig. 1: eine Darstellung eines 3D-Druckers (Stand der Technik),
- Fig. 2: eine Darstellung eines erfindungsgemäßen 3D-Druckers,
- Fig. 3: eine Darstellung einer Modellierstange,
- Fig. 4: eine Darstellung einer Zufuhreinrichtung.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

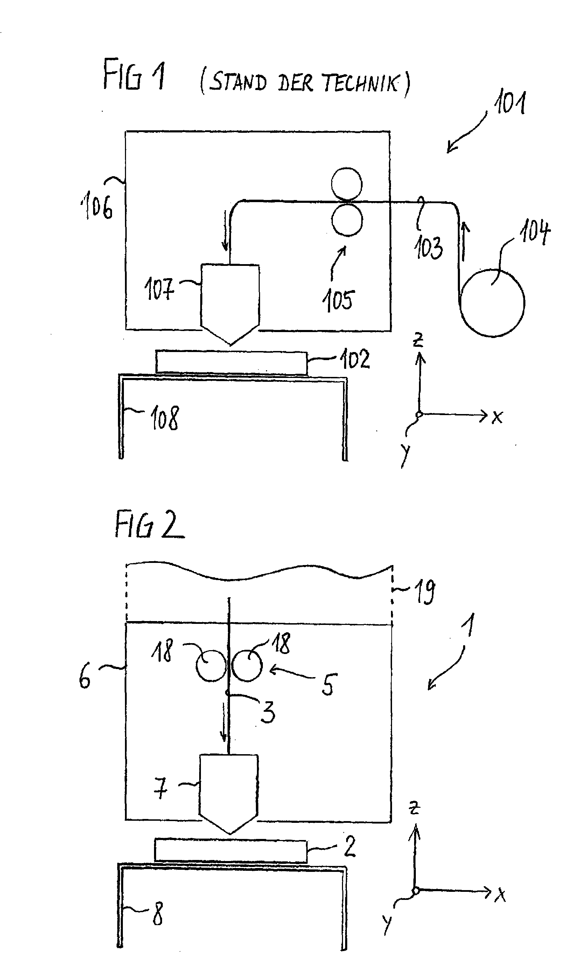

Eine aus dem Stand der Technik bekannte Vorrichtung 101 zur Herstellung eines dreidimensionalen Objektes 102 durch Schmelzschichtung ist in Fig. 1 dargestellt. Dabei wird das Objekt 102 schichtweise aus einem schmelzfähigen Modelliermaterial aufgebaut, welches als Filament 103 in Rollenform vorliegt und auf einer Spule 104 aufgewickelt ist. Als Antrieb 105 zum Zuführen des Filaments 103 in den Extrusionskopf 106 dienen zwei an dem Filament angreifende Rollen.

Eine erfindungsgemäße Vorrichtung 1, bei der als Modelliermaterial Modellierstangen 3 verwendet werden, wie sie weiter unten im Detail beschrieben sind, ist in Fig. 2 abgebildet.

Das Modelliermaterial 3 wird durch Erwärmung verflüssigt und mit Hilfe einer in einer Fertigungsebene in x-y-Richtung frei verfahrbaren, beheizbaren Extrusionsdüse 7 schichtweise auf einer Bauplattform 8 abgelegt. Entsprechend der aufgebrachten Schichtdicke wird die Bauplattform 8 in z-Richtung abgesenkt. Das Verflüssigen und Extrudieren des Modelliermaterials 3 findet in einem Extrusionskopf 6 statt, der entweder über einen separaten Verflüssiger zum Schmelzen des Modelliermaterials 3 und eine Ausgabedüse zum Extrudieren des Modelliermaterials oder aber, wie im dargestellten Beispiel, über eine Heizdüse 7 verfügt, die sowohl zum Verflüssigen, als auch zum Extrudieren ausgebildet ist.

Nach dem Extrudieren des Modelliermaterials 3 kühlt dieses ab und erstarrt. Die einzelnen Schichten verbinden sich dabei zu dem gewünschten dreidimensionalen Objekt 2.

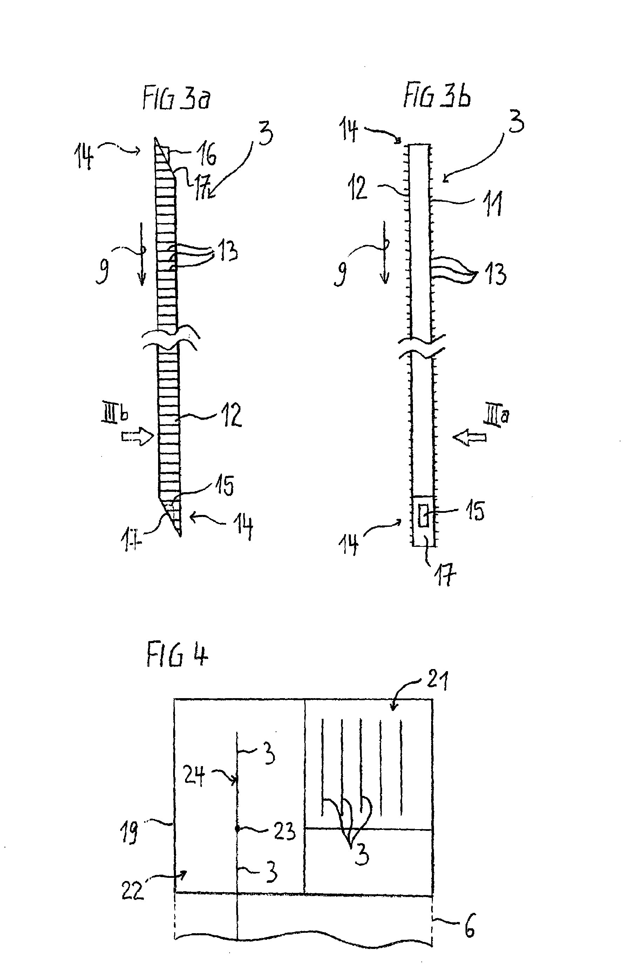

Eine Modellierstange 3 ist in Fig. 3 dargestellt. Sie ist von länglicher, gerader Gestalt und weist einen im wesentlichen quadratischen Querschnitt auf. Die Länge beträgt beispielsweise 30 cm, bei einer Querschnittsfläche von beispielsweise 3 x 3 mm. Die Modellierstange 3 ist fest und im wesentlichen starr, dabei dennoch so flexibel, daß sie bei üblicher Handhabung nicht bricht. Sie ist aus einem schmelzbaren Kunststoffmaterial einkomponentig aufgebaut, mit Hilfe eines Spritzgießverfahrens hergestellt und weist ein sich in Stangenlängsrichtung 9 änderndes Oberflächenprofil auf. Dieses Profil wird gebildet durch an zwei gegenüberliegenden Seitenflächen 11, 12 der Stange 3 angeordnete Verbindungselemente in Gestalt von im wesentlichen senkrecht aus den Seitenflächen 11, 12 ragenden Zähnen 13. Die an der einen Seitenfläche 11 angeordnete erste Zahnreihe ist zu der an der anderen, gegenüberliegenden Seitenfläche 12 angeordneten zweiten Zahnreihe versetzt angeordnet derart, daß das Materialvolumen der Stange 3 in Stangenlängsrichtung 9 gesehen nicht ändert. An ihren Enden 14 weist die Stange 3 Verbindungselemente 15, 16 auf. Diese sind hier beispielhaft als Nut-Feder-Elemente ausgeführt. Nut 15 und Feder 16 ragen dabei aus komplementären verbindungsflächen 17 heraus, die sich dadurch ergeben, daß die Enden 14 der Modellierstange 3 abgeschrägt sind. Im verketteten Zustand der Stangen 3 liegen die Verbindungsflächen 17 benachbarter Stangen aneinander an.

Zur Gewährleistung einer kontinuierlichen Materialzufuhr werden die erforderlichen Modellierstangen 3 dem Extrusionskopf 6 nacheinander zugeführt. Hierfür weist der 3D-Drucker 1 einen elektromotorischen Antrieb 5 auf, der den Vorschub des Modelliermaterials bewirkt. Der Antrieb 5 umfaßt zwei sich gegenüberliegende Zahnräder 18. Die Zähne dieser Zahnräder 18 sind derart ausgeführt, daß sie als an der Modellierstange 3 angreifende und mit den Profilelementen 13 der Modellierstange 3 formschlüssig zusammenwirkende Vorschubelemente dienen.

Es sind auch 3D-Drucker 1 mit mehreren parallel oder nacheinander arbeitenden Extrusionsköpfen 6 möglich, bei denen zwei oder mehr Modellierstangen 3 gleichzeitig bereitgestellt werden. Vorteilhafterweise dabei dient eine der Modellierstangen 3 zur Bereitstellung von Stützmaterial zum Aufbau von Stützstrukturen, die nach dem Aushärten des Objektes 2 leicht wieder entfernt werden können.

Zur Herstellung eines bestimmten Objektes 2 ist eine bestimmte Anzahl vordefinierter Modellierstangen 3 erforderlich. Die Länge der Modellierstangen 3 ist von dem herzustellenden Objekt 2 abhängig, ebenso wie deren Reihenfolge der Verwendung vorgegeben ist. Gleiches gilt für den Stangenquerschnitt, sofern Stangen 3 mit variablem Querschnitt zum Einsatz kommen. Grundlage für die Fertigung der Modellierstangen 3 ist ein Datenmodell des Objektes 2, welches beispielsweise im STL-Format vorliegt.

Die erforderlichen Modellierstangen 3 werden dem Extrusionskopf 6 vorzugsweise automatisch zugeführt, nachdem sie automatisch miteinander verbunden werden. Hierzu weist der 30-Drucker 1 eine mit dem Extrusionskopf 6 fest verbundene oder wahlweise verbindbare Materialzufuhreinrichtung 19 auf, wie in Fig. 4 dargestellt. Die Zufuhreinrichtung 19 umfaßt einen Vorratsbehälter 21 zur Aufnahme einer Anzahl von Modellierstangen 3, vorzugsweise in einer definierten oder definierbaren Reihenfolge. Mit dem Vorratsbehälter 21 verknüpft ist ein Verbinder 22, welcher die Stangen 3 aus dem Vorratsbehälter 21 empfängt und an ihren Enden 14 miteinander verbindet. Die Stangen 3 werden dem Verbinder 22 dabei vorzugsweise selbsttätig, beispielsweise durch Wirkung der Schwerkraft, oder unter Zuhilfenahme eines motorischen Antriebs zugeführt. Der Verbinder 22 verbindet die Stangen 3 miteinander, indem er eine Verbindung des an dem Ende 14 der einen Modellierstange 3 vorgesehenen Verbindungselements mit dem an dem Ende 14 der nächsten Modellierstange 3 vorgesehenen Verbindungselement herstellt. Handelt es sich bei den Verbindungselementen beispielsweise um Rastelemente, stellt der Verbinder 22 die Rastverbindung durch Verrasten der Rastelemente her. In Fig. 4 ist die Verbindung durch einen Punkt 23 symbolisiert. Der Verbinder 22 erzeugt somit verkettete Stangen in Form eines Stangenverbundes 24, der mit Hilfe von dem Fachmann bekannten Mitteln, beispielsweise einem weiteren Antrieb, dem Extrusionskopf 6 zugeführt werden und dort einen kontinuierlichen Materialstrom sicherstellen. Zum Auffüllen des Vorratsbehälters 21 sind in einer weiteren Ausführungsform der Erfindung Modellierstangenpakete vorgesehen, in denen die für die Herstellung eines bestimmten Objektes 2 benötigten Stangen 3 bereits in der richtigen Anordnung enthalten sind.

Es ist ebenfalls möglich, die im Zusammenhang mit den erfindungagemäßen Modellierstangen 3 beschriebene Profilierung bei herkömmlichem Modellierfilament 103 vorzusehen, welches in Rollenform vorliegt. Auch in diesem Fall wird eine präzisere Materialzufuhr erreicht. Weist das Modellierfilament 103 einen kreisrunden Querschnitt auf, kann, ebenso wie bei Modellierstangen 3 mit kreisrundem Querschnitt, eine Profilierung auf besonders einfache Weise erreicht werden, indem in den Filamentkörper Kerben als Profilelemente eingebracht werden, die mit entsprechenden Zähnen des Filamentantriebs einen formschlüssigen Antrieb und damit eine besonders gleichmäßige Materialzufuhr gewährleisten.

Alle in der Beschreibung, den nachfolgenden Ansprüchen und der Zeichnung dargestellten Merkmale können sowohl einzeln, als auch in beliebiger Kombination miteinander erfindungswesentlich sein. So ist beispielsweise auch die Verwendung von Modellierstangen 3 ohne Profilierung möglich, die mit Hilfe von Verbindungselementen 15, 16 miteinander verketten werden.

### Bezugszeichenliste

- 1: Vorrichtung, 3D-Drucker
- 2: Objekt
- 3: Modelliermaterial, Modellierstange
- 4: (frei)
- 5: Antrieb
- 6: Extrusionskopf
- 7: Extrusionsdüse
- 8: Bauplattform
- 9: Stangenlängsrichtung
- 10: (frei)
- 11: Seitenfläche
- 12: Seitenfläche
- 13: Profilelement, Zahn
- 14: Stangenende
- 15: Verbindungselement, Nut
- 16: Verbindungselement, Feder
- 17: Verbindungsfläche
- 18: Zahnrad
- 19: Materialzufugreinrichtung
- 20: (frei)
- 21: Vorratsbehälter
- 22: Verbinder
- 23: Verbindung
- 24: Stangenverbund
- 101: Vorrichtung, 3D-Drucker (Stand der Technik)
- 102: Objekt
- 103: Modellierfilament
- 104: Spule
- 105: Antrieb
- 106: Extrusionskopf
- 107: Extrusionsdüse
- 108: Bauplattform

## Patentansprüche

1. Schmelzfähiges Modelliermaterial (3) zur Herstellung eines dreidimensionalen Objektes (2) durch Schmelzschichtung, wobei das Objekt (2) schichtweise aus dem Modelliermaterial (3) aufgebaut wird, **dadurch gekennzeichnet, daß** das Modelliermaterial (3) eine Stangenform aufweist.

2. Modelliermaterial (3) nach Anspruch 1, **dadurch gekennzeichnet, daß** die Modelliermaterialstange (3) einen nichtrunden Querschnitt aufweist.

3. Modelliermaterial (3) nach Anspruch 1 oder 2, **dadurch gekennzeichnet, daß** die Modelliermaterialstange (3) ein sich in Stangenlängsrichtung (9) änderndes Oberflächenprofil aufweist, welches Oberflächenprofil vorzugsweise durch beabstandet voneinander angeordnete Profilelemente (13) gebildet wird.

4. Modelliermaterial (3) nach einem der Ansprüche 1 bis 3, **dadurch gekennzeichnet, daß** die Modelliermaterialstange (3) eine bestimmte Länge aufweist, die von dem herzustellenden Objekt (2) abhängt.

5. Modelliermaterial (3) nach einem der Ansprüche 1 bis 4, **dadurch gekennzeichnet, daß** die Modelliermaterialstange (3) mehrkomponentig aufgebaut ist.

6. Modelliermaterial (3) nach einem der Ansprüche 1 bis 5, **dadurch gekennzeichnet, daß** die Modelliermaterialstange (3) an wenigstens einem Stangenende (14) ein Verbindungselement (15, 16) zur Herstellung einer Verbindung zu einer weiteren Modelliermaterialstange (3) aufweist.

7. Verfahren zur Herstellung eines dreidimensionalen Objektes (2) durch Schmelzschichtung, wobei das Objekt (2) schichtweise aus einem schmelzfähigen Modelliermaterial (3) aufgebaut wird, **dadurch gekennzeichnet, daß** in Stangenform vorliegendes Modelliermaterial (3) verwendet wird.

8. Verfahren nach Anspruch 7, **dadurch gekennzeichnet, daß** zur Herstellung des Objektes (2) mehrere Modelliermaterialstangen (3) verwendet und diese vorzugsweise automatisch miteinander verbunden werden.

9. Vorrichtung (1) zur Herstellung eines dreidimensionalen Objektes (2) durch Schmelzschichtung, wobei das Objekt (2) schichtweise aus einem schmelzfähigen Modelliermaterial (3) aufgebaut wird, **dadurch gekennzeichnet, daß** die Vorrichtung (1) ausgebildet ist zur Verwendung von in Stangenform vorliegendem Modelliermaterial (3).

10. Vorrichtung (1) nach Anspruch 9, **gekennzeichnet durch** einen vorzugsweise motorischen Antrieb (5) für den Vorschub des Modelliermaterials (3) in den Extrusionskopf (6), welcher Antrieb (5) eine Anzahl von an einer Modelliermaterialstange (3) angreifenden Vorschubelementen (18) aufweist, welche Vorschubelemente (18) derart profiliert sind, daß sie mit Profilelementen (13) der Modelliermaterialstange (3) formschlüssig zusammenwirken.

11. Vorrichtung (1) nach Anspruch 9 oder 10, **gekennzeichnet durch** eine Materialzufuhreinrichtung (19) zum vorzugsweise automatischen Zuführen von Modelliermaterialstangen (3) in den Extrusionskopf (6) und/oder Verbinden von Modelliermaterialstangen (3) zu einem Modelliermaterialstangenverbund (24) .
